# DEMANDE DE BREVET EUROPEEN

(11) **EP 1 591 420 A2**
(43) Date de publication de la demande: **02.11.2005**
(21) Numéro de dépôt: 05290632.8
(22) Date de dépôt: 22.03.2005
(51) Int. Cl.: C01B 37/00, C01B 39/06

(54) **Solide cristallisé ITQ-31 et son procédé de préparation**

(30) Priorité: 09.04.2004 FR 0403823
(71) Demandeur: Institut Français du Pétrole, 92852 Rueil Malmaison Cédex (FR)
(72) Inventeur: Barea, Eva, 46520 Puerto Sagunto, Valencia (ES); Fornes, Vicente, 46001 Valencia (ES); Corma, Avelino, 46022 Valence (ES); Bourges, Patrick, 69003 Lyon (FR); Guillon, Emmanuelle, 69230 Saint Genis Laval (FR)

(57) **Abrégé**

L'invention concerne un solide cristallisé, désigné sous l'appellation ITQ-31, lequel présente un diagramme de diffraction de rayons X tel que donné ci-dessous. Le dit solide présente une composition chimique exprimée sur une base anhydre, en termes de mole d'oxydes, par la formule XO₂ : m YO₂ : p Z₂O₃ : q R : s F , R représente un structurant organique azoté, X représente un ou plusieurs élément(s) tétravalent(s) différent(s) du germanium, Y représente le germanium, Z représente au moins un élément trivalent, F est le fluor.

## Description

### Domaine technique

La présente invention se rapporte à un nouveau solide cristallisé appelé ci-après ITQ-31 présentant une nouvelle structure cristalline ainsi qu'au procédé de préparation dudit solide.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.
Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant: "Atlas of Zeolites Structure Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511), ITQ-22 (Corma, A. et al, Nature Materials 2003, 2, 493), SSZ-53 (Chem. Eur. J. 9. (23) 5737-5748 (2003)), SSZ-59 (Chem. Eur. J. 9. (23) 5737-5748 (2003)), SSZ-58 (Burton, A., et al, J. Am. Chem. Soc., 2003, 125, 1633) et UZM-5 (Blackwell, C.S. et al, Angew. Chem., Int. Ed. , 2003, 42 , 1737).
Plusieurs des zéolithes précédemment citées ont été synthétisées en milieu fluorure dans lequel l'agent mobilisateur n'est pas l'ion hydroxyde habituel mais l'ion fluorure selon un procédé initialement décrit dans US 4.073.865. Les pH des milieux de synthèses sont typiquement proche de la neutralité. Un des avantages de ces systèmes réactionels fluorés est de permettre l'obtention de zéolithes purement siliciques contenant moins de défauts que les zéolithes obtenues en milieu OH- traditionnel (J.M. Chézeau et al., Zeolites, 1991, 11, 598). Un autre avantage décisif lié à l'utilisation de milieux réactionnels fluorés est de permettre l'obtention de nouvelles topologies de charpente contenant des doubles cycles à quatre tétraèdres comme c'est le cas des zéolithes ITQ-7, ITQ-13, ITQ-17. Cependant, l'utilisation conjointe de sources de germanium et de silicium dans les milieux de synthèse peut permettre l'obtention de telles charpentes en milieu basique classique non fluoré comme dans le cas des zéolithe ITQ-17, ITQ-21 (A. Corma et al, Chem. Commun., 2001, 16, 1486, Chem. Commun., 2003, 9, 1050).

### Description de l'invention

La présente invention se rapporte à un nouveau solide cristallisé, appelé solide cristallisé ITQ-31, présentant une nouvelle structure cristalline. Ledit solide présente une composition chimique exprimée sur une base anhydre, en termes de mole d'oxydes, définie par la formule générale suivante : XO₂ : m YO₂ : p Z₂O₃ : q R : s F dans laquelle R représente un structurant organique azoté, X représente un ou plusieurs élément(s) tétravalent(s) différent(s) du germanium, Y représente le germanium, Z représente au moins un élément trivalent, F est le fluor , m, p, q, s, représentant respectivement le nombre de mole de YO₂, Z₂O₃, R et F.
Le solide cristallisé ITQ-31 selon l'invention présente un diagramme de diffraction de rayons X incluant au moins les raies inscrites dans le tableau 1. Les raies inscrites dans le tableau 1 correspondent de préférence au solide ITQ-31 sous sa forme brute de synthèse. Ce nouveau solide cristallisé ITQ-31 présente une nouvelle structure cristalline.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à ± 0,2° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé ITQ-31 selon l'invention comporte au moins les raies aux valeurs de dₕₖₗ données dans le tableau 1. Dans la colonne des dₕₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,2Å et ± 0,008Å.

**Tableau 1 :**

| Valeurs moyennes des dₕₖₗ et intensités relatives mesurées sur un diagramme de diffraction de rayons X du solide cristallisé ITQ-31 de l'invention | | |
|---|---|---|
| dₕₖₗ (Å) | 2 thêta (°) | I/I₀ |
| 8.72 | 10.12 | FF |
| 7.19 | 12.29 | ff |
| 6.17 | 14.32 | ff |
| 5.55 | 15.93 | ff |
| 4.69 | 18.90 | f |
| 4.36 | 20.32 | ff |
| 3.90 | 22.72 | m |
| 3.77 | 23.55 | mf |
| 3.73 | 23.81 | f |
| 3.60 | 24.70 | f |
| 3.43 | 25.94 | ff |
| 3.32 | 26.76 | f |
| 3.11 | 28.66 | ff |
| 3.03 | 29.43 | ff |
| 2.91 | 30.65 | ff |
| 2.84 | 31.46 | ff |
| 2.77 | 32.18 | f |
| 2.71 | 32.95 | f |
| 2.64 | 33.81 | f |
| 2.58 | 34.74 | ff |
| 2.39 | 37.50 | ff |
| 2.34 | 38.33 | f |

où FF = très fort ; m = moyen ; f = faible ; F = fort ; mf = moyen faible ; ff = très faible.
L'intensité relative I/I₀ est donnée en rapport à une échelle d'intensité relative où il est attribué une valeur de 100 à la raie la plus intense du diagramme de diffraction des rayons X : ff<15 ; 15≤f<30;30≤mf<50;50≤m<65;65≤F<85;FF≥85.

Avantageusement, le rapport Ge/X de la charpente du solide cristallisé ITQ-31 selon l'invention est compris entre 0,01 et 1 et de préférence entre 0,05 et 0,33. Le rapport {(1+m)/p} est supérieur ou égal à 5 et est de manière préférée supérieur ou égal à 7. La valeur de p est préférentiellement comprise entre 0 et 0,5, très préférentiellement comprise entre 0 et 0,4 et de manière encore plus préférée comprise entre 0,01 et 0,4. Les valeurs de q sont avantageusement comprises entre 0,01 et 0,7 et très avantageusement comprises entre 0,1 et 0,5. s est compris entre 0,01 et 0,7 de préférence entre 0,01 et 0,5. m est compris entre 0,01 et 1.
Conformément à l'invention, X est préférentiellement choisi parmi le silicium, l'étain et le titane, et Z est préférentiellement choisi parmi l'aluminium, le bore, le fer, l'indium et le gallium et très préférentiellement Z est l'aluminium. De manière préférée, X est le silicium : le solide cristallisé ITQ-31 selon l'invention est alors un métallosilicogermanate cristallisé présentant un diagramme de diffraction des rayons X identique à celui décrit dans le tableau 1.
De manière encore plus préférée, X est le silicium et Z est l'aluminium : le solide cristallisé ITQ-31 selon l'invention est alors un aluminosilicogermanate cristallisé présentant un diagramme de diffraction des rayons X identique à celui décrit dans le tableau 1.
Dans le cas où le solide cristallisé ITQ-31 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide ITQ-31 comporte un structurant organique azoté tel que celui décrit ci-après ou ses produits de décomposition, ou encore ses précurseurs. Selon l'invention, R est un structurant de la famille des diamines et selon un mode préféré de l'invention le structurant organique azoté R a pour formule R₁R₂ - N - (CH₂)x - N - R₃R₄, avec Rᵢ, i=1-4 = H ou CₙH₂ₙ₊₁, n compris entre 1 et 6 et x compris entre 1 et 12, les groupes R₁ et R₂ étant préférentiellement identiques et les groupes R₃ et R₄ étant préférentiellement identiques. Les groupes R₁ et R₂ peuvent être identiques ou différents des groupes R₃ et R₄. Le structurant peut être éliminé par les voies classiques de l'état de la technique comme des traitements thermiques et/ou chimiques.
Le solide cristallisé ITQ-31 selon l'invention est de préférence un solide zéolithique.

L'invention concerne également un procédé de préparation du solide cristallisé ITQ-31 dans lequel on fait réagir un mélange aqueux comportant au moins une source d'au moins un oxyde XO₂, au moins une source de l'oxyde YO₂, éventuellement au moins une source d'au moins un oxyde Z₂O₃ et au moins un structurant organique azoté R, le mélange présentant préférentiellement la composition molaire suivante :

| | |
|---|---|
| (XO₂+YO₂)/Z₂O₃ | au moins 5, de préférence au moins 7, |
| H₂O/(XO₂+YO₂) | 1 à 50, de préférence 2 à 30, |
| R/(XO₂+YO₂) | 0,1 à 3, de préférence 0,1 à 1, |
| F/(XO₂+YO₂) | 0,01 à 0,7, de préférence de 0,01 à 0,5, |
| YO₂/XO₂ | 0,01 à 1, de préférence 0,5 à 1. |

où X est un ou plusieurs élément(s) tétravalent(s) différent(s) du germanium , de préférence le silicium, Y est le germanium, Z est un ou plusieurs élément(s) trivalent(s) choisi(s) dans le groupe formé par les éléments suivants : aluminium, fer, bore, indium et gallium, de préférence l'aluminium.
Le fluor peut être introduit sous forme de sels de métaux alcalins ou d'ammonium comme par exemple NaF, NH₄F, NH₄HF₂ ou sous forme d'acide fluorhydrique ou encore sous forme de composés hydrolysables pouvant libérer des anions fluorures dans l'eau comme le fluorure de silicium SiF₄ ou les fluorosilicates d'ammonium (NH₄)₂SiF₆ ou de sodium Na₂SiF₆.
Conformément au procédé selon l'invention, R est un structurant organique azoté.
Préférentiellement, R est une diamine et de manière encore plus préféré R a pour formule R₁R₂ - N - (CH₂)ₓ - N - R₃R₄, avec Rᵢ, ᵢ₌₁₋₄ = H ou CₙH₂ₙ₊₁, n compris entre 1 et 6 et x compris entre 1 et 12, les groupes R₁ et R₂ étant préférentiellement identiques et les groupes R₃ et R₄ étant préférentiellement identiques. Les groupes R₁ et R₂ peuvent être identiques ou différents des groupes R₃ et R₄. Les composés R ayant la formule générale indiquée ci-dessus sont commercialisés. De manière encore plus préférée, le structurant organique azoté est le composé N,N'- dimethyl - 1,3 - propanediamine ou le composé 3 - dimethylamine - 1 - propylamine. Ces composés sont commercialisés par la société Aldrich.

La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX.
La source de l'élément Z peut être tout composé comprenant l'élément Z et pouvant libérer cet élément en solution aqueuse sous forme réactive. Dans le cas préféré où Z est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.
La source d'élément Y pourra être par exemple un oxyde de germanium GeO₂.
Selon un mode de réalisation préféré du procédé selon l'invention, on fait réagir un mélange aqueux comportant de la silice, de l'alumine, un oxyde de germanium, de l'acide fluohydrique et une diamine, de préférence un composé choisi parmi le N,N'- dimethyl - 1,3 - propanediamine et le 3 - dimethylamine - 1 - propylamine.
Le procédé selon l'invention consiste à préparer un mélange réactionnel aqueux appelé gel et renfermant au moins une source d'au moins un oxyde XO₂, au moins une source de l'oxyde YO₂, éventuellement au moins une source d'au moins un oxyde Z₂O₃ et au moins un structurant organique azoté R, ou au moins un précurseur du structurant organique azoté ou au moins un produit de décomposition du structurant organique azoté. Les quantités desdits réactifs sont ajustées de manière à conférer à ce gel une composition permettant sa cristallisation en solide cristallisé ITQ-31 de formule XO₂ : m YO₂ : p Z₂O₃ : q R : s F , où m, p, q et s répondent aux critères définis plus haut. Puis le gel est soumis à un traitement hydrothermal jusqu'à ce que le solide cristallisé ITQ-31 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore préférentielle à une température qui ne dépasse pas 175°C jusqu'à la formation des cristaux de solide ITQ-31 selon l'invention. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.
Il peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé ITQ-31 au détriment d'impuretés. De tels germes comprennent des solides cristallisés, notamment des cristaux de solide ITQ-31. Les germes cristallins sont généralement ajoutés dans une proportion comprise entre 0,01 et 10 % du poids de l'oxyde XO₂, de préférence de la silice, utilisé dans le mélange réactionnel.
A la fin de la réaction, la phase solide est filtrée et lavée; elle est ensuite prête pour des étapes ultérieures telles que le séchage, la déshydratation et la calcination et/ou l'échange d'ions. Pour ces étapes, toutes les méthodes conventionnelles connues de l'homme du métier peuvent être employées.
L'invention est illustrée au moyen des exemples suivants.

### Exemple 1

4,35 g d'oxyde de Germanium GeO₂ (Aldrich, pureté 99.998%) sont mélangés avec 24,758g d'eau (milli Q at 18.2 Ω), 3,27 g de N,N'- dimethyl - 1,3 - propanediamine (pureté 97%, Aldrich) et 12,5 g d'une solution de silice colloidale (Ludox AS). Le mélange est vigoureusement agité pendant 2 heures et quand il est homogène 2,59g d'acide fluorhydrique HF (48.1%, J.T. Baker) sont ajoutés et l'ensemble est encore mélangé 10 minutes.

La composition molaire du gel est SiO₂: 0,5 GeO₂ : 0,75 HF : 0,38 R :22,5 H₂O.

Le gel est ensuite transféré dans une chemise en téflon puis la chemise est placée dans un autoclave de 20 millilitres, chauffé à 150°C pendant 10 jours sous agitation.

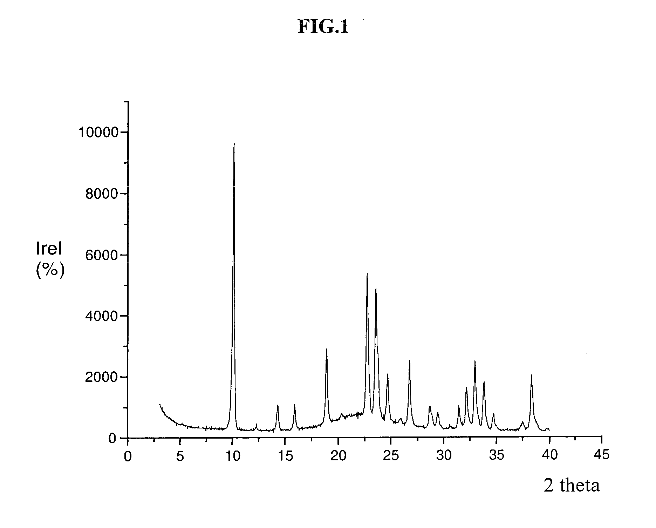

Le produit solide séché a été analysé par diffraction X de poudres et identifié comme étant constitué de solide ITQ-31. Le diffractogramme effectué sur l'échantillon brut de synthèse est identique à celui donné dans la figure 1. L'analyse chimique du produit par fluorescence X a été effectuée et donne le rapport Si/Ge = 10.

### Exemple 2 :

0.24 g d'hydroxyde d'aluminium Al(OH)₃ (38.8% H₂O, Aldrich) sont mélangés à 1,74 g d'oxyde de germanium GeO₂ (Aldrich, pureté 99.998%), 2,57 g of N,N'- dimethyl - 1,3 - propanediamine (pureté 97 %, Aldrich.) et 12,5 g d'une solution de silice colloidale (Ludox AS, 40% H₂O). Le mélange est vigoureusement agité jusqu'à évaporation de 3,27 g d'eau. Puis, 2,07g d'acide fluorhydriqe HF (48.1%, J.T. Baker) sont ajoutés et l'ensemble est encore mélangé 10 minutes.

*La composition molaire du gel est SiO*_{*2*} *: 0, 2 GeO*_{*2*} *: 0, 02 Al*_{*2*}*O*_{*3*} *: 0, 6 HF : 0, 3 R : 3, 6 H*_{*2*}*O.*

Le gel est ensuite transféré dans une chemise en téflon puis la chemise est placée dans un autoclave de 20 millilitres, chauffé à 150°C pendant 10 jours dans des conditions agitées.

Le produit solide séché a été analysé par diffraction X de poudres et identifié comme étant constitué de solide ITQ-31. Le diffractogramme effectué sur l'échantillon brut de synthèse est identique à celui donné dans la figure 1.

### Exemple 3

1,74 g d'oxyde de Germanium GeO₂ (Aldrich, pureté 99.998%) sont mélangés avec 2,57g de N,N'- dimethyl - 1,3 - propanediamine (pureté 97 %, Aldrich.) et 12,5 g d'une solution de silice colloidale (Ludox AS, 40% H₂O). Le mélange est vigoureusement agité pendant 2 heures jusqu'à évaporation de 3,25g d'eau. Ensuite 2,06g d'acide fluorhydrique HF (48.1%, J.T. Baker ) sont ajoutés puis le mélange est agité vigoureusement encore 15 minutes.

*La composition molaire du gel est SiO*_{*2*}*: 0, 2 GeO*_{*2*}*: 0,6 HF : 0,3 R : 3,6 H*_{*2*}*O.*

Le gel est ensuite transféré dans une chemise en téflon puis la chemise est placée dans un autoclave de 20 millilitres, chauffé à 150°C pendant 10 jours dans des conditions agitées.

Le produit solide séché a été analysé par diffraction X de poudres et identifié comme étant constitué de solide ITQ-31. Le diffractogramme effectué sur l'échantillon brut de synthèse est identique à celui donné dans la figure 1.

## Revendications

1. Solide cristallisé ITQ-31 présentant un diagramme de diffraction de rayons X incluant au moins les raies inscrites dans le tableau ci-dessous :
| dₕₖₗ (Å) | 2 thêta (°) | I/I₀ |
|---|---|---|
| 8.72 | 10.12 | FF |
| 7.19 | 12.29 | ff |
| 6.17 | 14.32 | ff |
| 5.55 | 15.93 | ff |
| 4.69 | 18.90 | f |
| 4.36 | 20.32 | ff |
| 3.90 | 22.72 | m |
| 3.77 | 23.55 | mf |
| 3.73 | 23.81 | f |
| 3.60 | 24.70 | f |
| 3.43 | 25.94 | ff |
| 3.32 | 26.76 | f |
| 3.11 | 28.66 | ff |
| 3.03 | 29.43 | ff |
| 2.91 | 30.65 | ff |
| 2.84 | 31.46 | ff |
| 2.77 | 32.18 | f |
| 2.71 | 32.95 | f |
| 2.64 | 33.81 | f |
| 2.58 | 34.74 | ff |
| 2.39 | 37.50 | ff |
| 2.34 | 38.33 | f |
où FF = très fort ; m = moyen ; f = faible ; F = fort ; mf = moyen faible ; ff = très faible, et présentant une composition chimique exprimée sur une base anhydre, en termes de mole d'oxydes, définie par la formule générale suivante : XO₂ : m YO₂ : p Z₂O₃ : q R : s F dans laquelle R représente un structurant organique azoté, X représente un ou plusieurs élément(s) tétravalent(s) différent(s) du germanium, Y représente le germanium, Z représente au moins un élément trivalent, F est le fluor, m, p, q, s représentant respectivement le nombre de mole de YO₂, Z₂O₃, R et F et m est compris entre 0,01 et 1, p est compris entre 0 et 0,5, q est compris entre 0,01 et 0,7, s est compris entre 0,01 et 0,7, le rapport {(1+m)/p} est supérieur ou égal à 5.

2. Solide cristallisé ITQ-31 selon la revendication 1 dans lequel X est le silicium.

3. Solide cristallisé ITQ-31 selon la revendication 1 ou 2 dans lequel Z est l'aluminium.

4. Procédé de préparation d'un solide cristallisé ITQ-31 selon l'une des revendications 1 à 3 consistant à procéder au mélange d'au moins une source d'au moins un oxyde XO₂, d'au moins une source de l'oxyde YO₂, éventuellement d'au moins une source d'au moins un oxyde Z₂O₃ et d'au moins un structurant organique azoté R, ou d'au moins un précurseur du structurant organique azoté ou d'au moins un produit de décomposition du structurant organique azoté puis à procéder au traitement hydrothermal dudit mélange jusqu'à ce que ledit solide cristallisé ITQ-31 se forme.

5. Procédé de préparation d'un solide cristallisé ITQ-31 selon la revendication 4 tel que la composition molaire du mélange réactionnel est telle que :
| | |
|---|---|
| (XO₂+YO₂)/Z₂O₃ | au moins 5, |
| H₂O/(XO₂+YO₂) | 1 à 50, |
| R/(XO₂+YO₂) | 0,1 à 3, |
| F/(XO₂+YO₂) | 0,01 à 0,7, |
| YO₂/XO₂ | 0,01 à 1 |

6. Procédé de préparation selon la revendication 4 ou 5 tel que R est le composé N,N'- dimethyl - 1,3 - propanediamine ou le composé 3 - dimethylamine - 1 - propylamine..

7. Procédé de préparation selon l'une des revendications 4 à 6 tel que des germes sont additionnés dans le mélange réactionnel.
